# EUROPEAN PATENT APPLICATION

(11) **EP 2 077 592 A1**
(43) Date of publication of application: **08.07.2009**
(21) Application number: 07807458.0
(22) Date of filing: 18.09.2007
(51) Int. Cl.: H01M 2/10

(54) **BATTERY PACK AND BATTERY-MOUNTED DEVICE**

(30) Priority: 13.10.2006 JP 2006280134
(71) Applicant: Panasonic Corporation, Kadoma-shi Osaka 571-8501 (JP)
(72) Inventor: HIRAKAWA, Yasushi, Osaka 540-6207 (JP); NISHINO, Hajime, Osaka 540-6207 (JP); TAKAMURA, Koshi, Osaka 540-6207 (JP)
(74) Representative: Schwabe - Sandmair - Marx
(86) International application number: PCT/JP2007/068057
(87) International publication number: WO 2008/044430

(57) **Abstract**

A battery pack includes a battery having a risk of releasing a gas under abnormal conditions, a case that accommodates the battery, and an oxygen reducing portion that reduces an amount of oxygen within the case.

## Description

### Field of the Invention

The present invention relates to a battery pack accommodating a battery having a risk of releasing a gas under abnormal conditions and to a battery-mounted device.

### Descriptions of the Related Art

Recently, in association with diversification of electronic devices, a need for high-capacity, high-voltage, high-power, and safer battery and battery pack is increasing. In order to provide a battery and a battery pack with particularly high safety, there has been known a technique for providing a battery and a battery pack with various types of protection means, such as a PTC (Positive Temperature Coefficient) or a temperature fuse to prevent a temperature rise, and further a protection circuit to interrupt a current by sensing an internal pressure of the battery. A technique for providing a battery pack with a control circuit that controls charge and discharge of a battery for preventing the battery from being placed under abnormal conditions has been also known.

However, even when the protection means and the control circuit as described above are provided, the battery has a possibility of ejecting an inflammable gas from inside the battery when placed under abnormal conditions. Should such an event happen, it is probable that the case accommodating the battery breaks, melts or burns, or the ejected inflammable gas leaks to the outside of the battery pack or the ejected inflammable gas bums and fire spreads inside and outside the battery pack, which results in further damage.

As a method of preventing such phenomena, there have been proposed a method (see, for example, Patent Document 1) for a battery pack formed of a case accommodating a plurality of batteries, by which a gas released from a battery is released to the outside of the case while being diffused within the case so as to lower the temperature and the pressure, and a method (see, for example, Patent Document 2), by which a bag that takes on a duct-like shape when inflated is attached to a group of electric cells formed by aligning and interconnecting a plurality of batteries each having a safety valve for releasing a gas when an internal pressure of the battery rises to or above a predetermined value, so that the bag inflates and forms a duct when a huge volume of gas is produced for discharging a gas released from the battery to the outside and thereby lowering the pressure of the discharged gas.

However, because the gas discharged from a battery has a high temperature and pressure gas and highly inflammable, there is a risk of ignition upon contact or mixture with oxygen in air. In addition, because the batteries and the case accommodating the batteries are, for example, of shapes different from each other, a space is left between the batteries and the inner wall of the case. In some instances, a space is provided between the batteries and the inner wall of the case in order to accommodate wires interconnecting a plurality of batteries, a protection element to safeguard the batteries against an overcurrent or an overvoltage, and the like. The space within the case is filled with air and oxygen is contained in air.

Under these circumstances, even when an inflammable gas discharged from a battery is released to the outside while being diffused within the case of the battery pack according to the technique described in Patent Document 1, the presence of a space within the case poses a risk that the inflammable gas ignites by reacting with oxygen in air within the case, which gives rise to combustion of the flammable gas within the entire case, resulting in damage on more than one battery. Also, even when an inflammable gas released from a battery is discharged to the outside via the duct according to the technique described in Patent Document 2, there is a risk that the inflammable gas ignites by reacting with air within the duct and gives damage on the duct to the extent that the inflammable gas leaks inside the case and the inflammable gas in turn ignites by reacting with oxygen in air within the case, which gives rise to combustion of the inflammable gas within the entire case, resulting in damage on more than one battery.
Patent Document 1: JP-A-2005-322434
Patent Document 2: JP-A-2005-339932

### Summary of the Invention

The invention is achieved in view of the foregoing problems, and it is therefore an object of the present invention to provide a battery pack and a battery-mounted device capable of lowering a risk of damage caused by combustion of a gas even when the gas is released from a battery.

A battery pack according to one aspect of the present invention includes a battery having a risk of releasing a gas under abnormal conditions, a case that accommodates the battery, and an oxygen reducing portion that reduces an amount of oxygen within the case.

According to the foregoing structure, an amount of oxygen within the case is reduced by the oxygen reducing portion. Hence, should a gas be released from the battery, it is possible to lessen damage on the battery pack caused by combustion of the gas within the case because an amount of oxygen to react with the gas has been reduced.

Also, a battery-mounted device according to still another aspect of the invention includes a battery having a risk of releasing a gas under abnormal conditions, an accommodation chamber that accommodates the battery, and an oxygen reducing portion that reduces an amount of oxygen within the accommodation chamber.

According to the foregoing structure, an amount of oxygen within the accommodation chamber in which is accommodated the battery having a risk of releasing a gas is reduced by the oxygen reducing portion incorporated in the battery-mounted device. Hence, should a gas be released from the battery, it is possible to lower a risk that the battery and the battery-mounted device are damaged by combustion of the gas within the accommodation chamber because an amount of oxygen to react with the gas has been reduced.

### BRIER DESCRIPTION OF THE DRAWINGS

FIG. 1 is a perspective view showing an example structure of a battery pack according to one embodiment of the invention.
FIG. 2 is a cross sectional view showing the battery pack of FIG. 1.
FIG. 3 is a cross sectional view schematically showing an example structure of a battery shown in FIG. 1.
FIG. 4 is an explanatory view schematically showing the structure of an assembled battery shown in FIG. 1.
FIG. 5A and FIG. 5B are cross sectional views showing an example structure of a pressure valve shown in FIG. 1, wherein FIG. 5A shows a state where the valve is closed and FIG. 5B shows a state where the valve is open.
FIG. 6A and FIG. 6B are views showing a modification of the battery pack shown in FIG. 1, wherein FIG. 6A shows a cross sectional view of the battery pack when viewed in a transverse direction of the batteries shown in FIG. 1, and FIG. 6B shows a cross sectional view of the battery pack when viewed in a longitudinal direction of the batteries shown in FIG. 1.
FIG. 7 is a view showing a modification of the battery pack shown in FIG. 1.
FIG. 8 is a view showing a modification of the battery pack shown in FIG. 1.
FIG. 9A and FIG. 9B are cross sectional views showing examples of an inflow prevention portion.
FIG. 10 is a perspective view showing an example of the inflow prevention portion.
FIG. 11 is a view showing a modification of the battery pack shown in FIG. 1.
FIG. 12 is an explanatory view showing Examples.
FIG. 13 is a view specifying temperature measurement positions in a nail penetration test.
FIG. 14 is a conceptual view showing an example structure of a portable personal computer according to the second embodiment of the invention.
FIG. 15 is a conceptual view showing an example structure of an electric tool according to the third embodiment of the invention.
FIG. 16 is a conceptual view showing an example of an automobile according to the fourth embodiment of the invention.

### BEST MODE FOR CARRYING OUT THE INVENTION

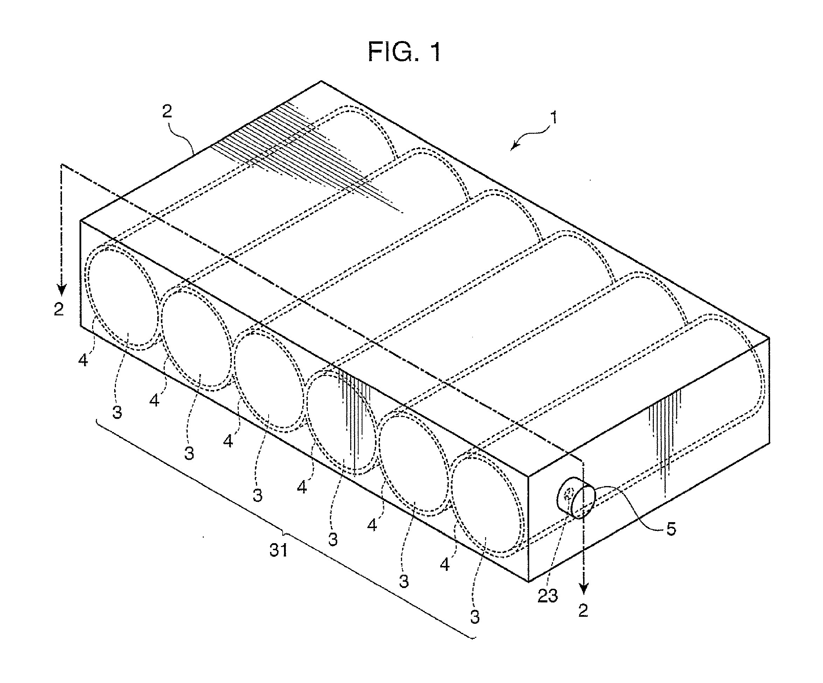

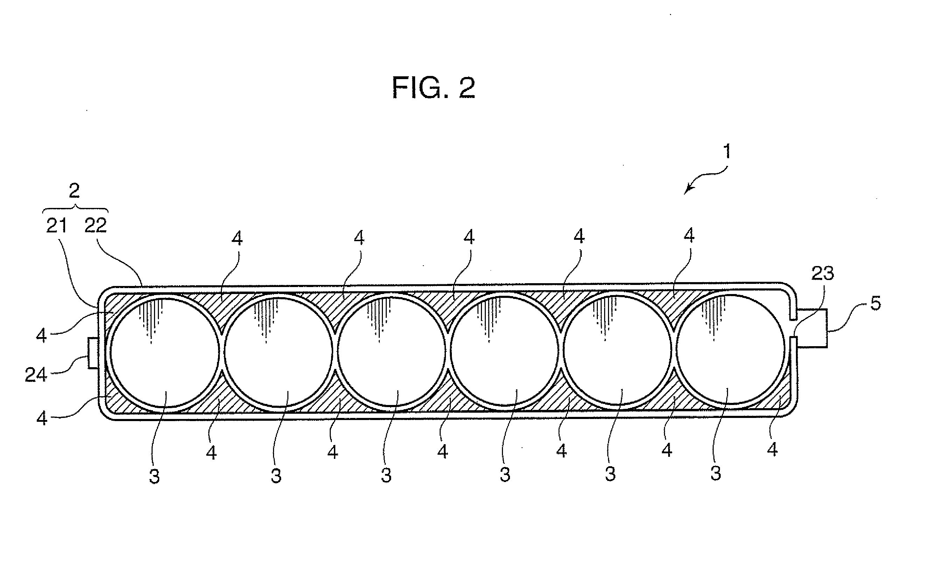

Hereinafter, embodiments of the invention will be described on the basis of the drawings. FIG. 1 is a perspective view showing an example structure of a battery pack according to one embodiment of the invention. FIG. 2 is a cross sectional view showing the battery pack 1 of FIG. 1 taken on line 2-2. A battery-mounted device according to one embodiment of the invention includes an electronic device, such as a portable personal computer and a video camera, a vehicle such as a four-wheel car and a two-wheel vehicle, which uses the battery pack 1 shown in FIG. 1 and mounted thereon as a power supply, and other types of battery-mounted device. In a case where the battery-mounted device is a vehicle, the battery pack 1 is used, for example, as the power supply of electric components incorporated in the vehicle or as a motor power supply for an electric vehicle, a hybrid car, and the like.

The battery pack 1 shown in FIG. 1 accommodates an assembled battery 31 formed by interconnecting a plurality of cylindrical batteries 3 inside an almost box-shaped case 2 (accommodation chamber). The case 2 is formed of a battery accommodation portion 21 and a battery pack lid 22. The battery accommodation portion 21 is provided with an opening 23 (releasing portion) through which a gas ejected from a battery is released to the outside of the battery pack. A pressure valve 5 is attached to the outside of the opening 23 so as to clog the opening 23.

As is shown in FIG. 2, to the inner wall of the case 2, that is, the inner wall of the battery accommodation portion 21 and the battery pack lid 22, are attached filling members 4 that are formed so as to fill a space between the inner wall and the assembled battery 31. Further, to the outer wall of the battery accommodation portion 21 are attached battery pack terminals 24 used to extract electricity from the assembled battery 31. The battery accommodation portion 21 and the battery pack lid 22 are made, for example, of metal, which is a nonflammable material, such as iron, nickel, aluminum, titanium, copper, and stainless, heat resistant resin, such as wholly aromatic liquid crystalline polyester, polyethersulfone, and aromatic polyamide, or formed of a laminated body of metal and resin. It is configured in such a manner that the almost rectangular box-shaped case 2 is formed by sealing the opening of the battery accommodation portion 21 with the battery pack lid 22.

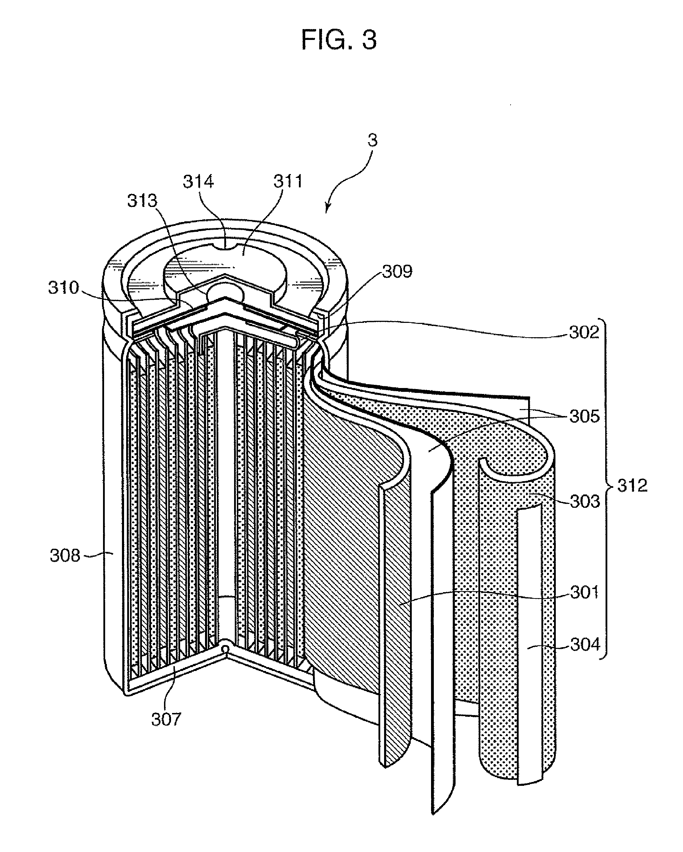

FIG. 3 is a cross-sectional view schematically showing an example structure of the battery 3. The battery 3 shown in FIG. 3 is a nonaqueous electrolyte secondary battery of the winding structure having a pole plate group, for example, an 18650 cylindrical lithium-ion secondary battery. A pole plate group 312 is of the structure in which a positive plate 301 provided with a positive lead current collector 302 and a negative plate 303 provided with a negative lead current collector 304 are wound spirally with a separate 305 in between. An unillustrated top insulation plate is attached to the top of the pole plate group 312 and a bottom insulation plate 307 is attached to the bottom. The pole plate group 312 and a case 308 holding an unillustrated nonaqueous electrolyte are sealed with a gasket 309, a sealing plate 310, and a positive terminal 311.

A groove 313 of an almost circular shape is formed in the sealing plate 310 almost at the center. It is configured in such a manner that the groove 313 breaks when an internal pressure of the case 308 exceeds a predetermined pressure due to a gas generated inside, so that the gas within the case 308 is released. A convex portion for external connection is provided to the positive electrode 311 at almost the center and the convex portion is provided with an electrode opening 314 (releasing hole). It is therefore configured in such a manner that the gas released when the groove 313 breaks is released to the outside of the battery 3 through the electrode opening 314.

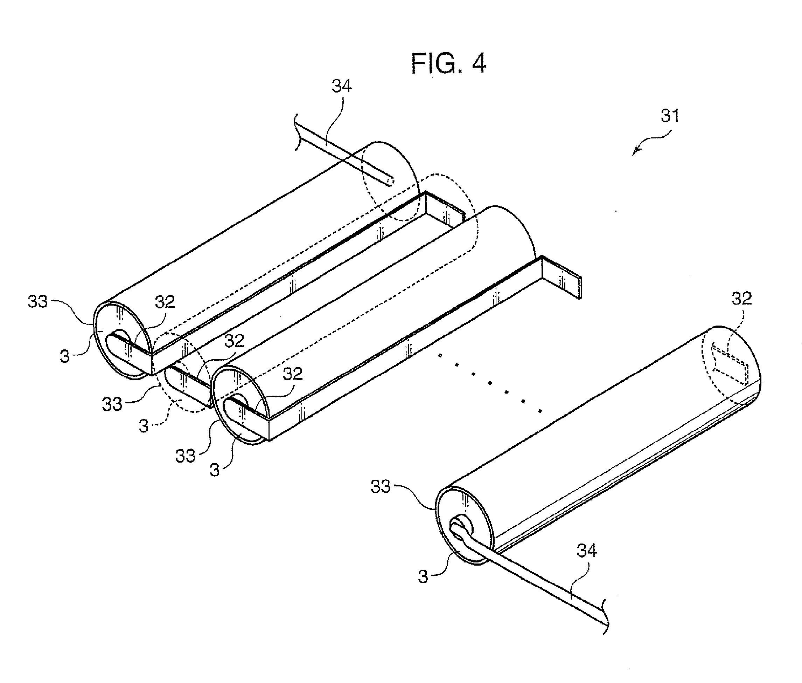

FIG. 4 is an explanatory view schematically showing the structure of the assembled battery 31. The assembled battery 31 shown in FIG. 4 is formed of six batteries 3 that are interconnected in series by connection plates 32. The connection plates 32 and the respective batteries 3 are connected to each other, for example, by means of welding. Also, a sheet of battery-can insulator 33 is wound around each battery 3 to electrically isolate one battery 3 from another. The both ends of the series circuit formed of the six batteries 3 in this manner are respectively connected to the two battery pack terminals 24 via connection lead wires 34.

Forming the battery 3 by spirally winding the pole plate group 312 as is shown in FIG. 3 makes it easier to increase the pole plate area while achieving a compact shape. Hence, it is popular to form the battery 3 by spirally winding the pole plate group 312. The battery 3 formed by spirally winding the pole plate group 312 naturally takes on a cylindrical shape.

Meanwhile, the battery pack 1 is used in a state where it is accommodated in the case of a battery-mounted device or attached to the outer wall of the battery-mounted device. It is therefore general to form the case 2 in a rectangular box shape so that it can be readily accommodated into or attached to the device case. Consequently, the battery 3 is of a cylindrical shape whereas the case 2 is of a rectangular shape. Hence, when the cylindrical battery 3 is accommodated in the rectangular case 2, a space is left between the battery 3 and the inner wall of the case 2 due to the difference in shape, which increases an amount of oxygen within the case 2 unless some measure is taken. It should be noted, however, that the battery pack 1 shown in FIG. 1 and FIG. 2 is provided with the filling members 4 that are attached so as to fill the space between the inner wall of the case 2 and the batteries 3, and is thereby configured in such a manner that an amount of oxygen within the case 2 is reduced by reducing the space within the case 2.

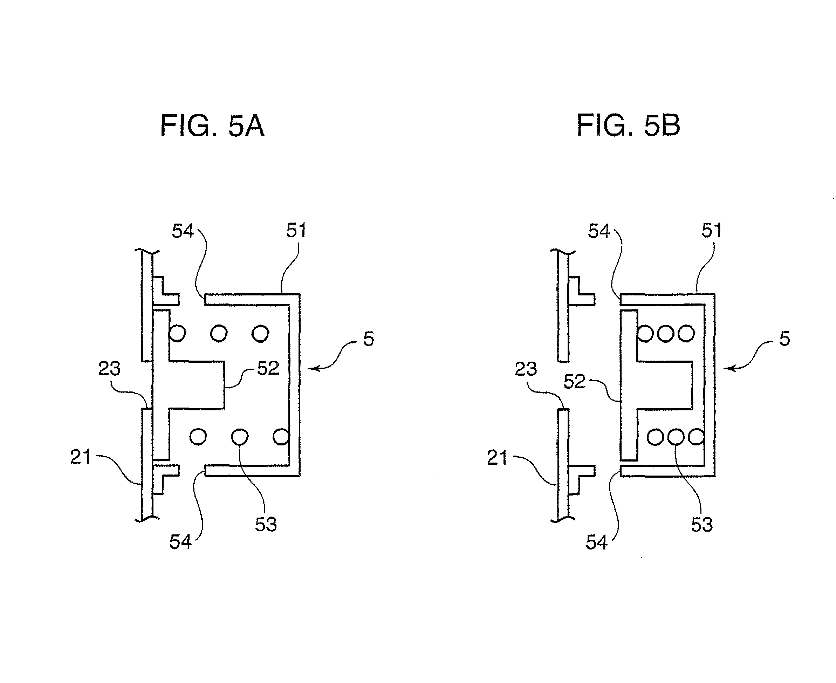

FIG. 5A and FIG. 5B are cross sectional views showing an example structure of the pressure valve 5. FIG. 5A shows a state where the valve is closed and FIG. 5B shows a state where the valve is opened. The pressure valve 5 shown in FIG. 5A and FIG. 5B is formed of a bottomed-case 51 of an almost cylindrical shape in which a pressure-actuated valve 52 and a pressure-actuated spring 53 are accommodated. The opening side of the case 51 is attached so as to cover the opening 23 of the battery accommodation portion 21. Also, the case 51 is provided with an opening 54 in the side face.

It is configured in such a manner that the opening 23 is clogged by the pressure-actuated valve 52 when the pressure-actuated valve 52 is pressed against the opening 23 by the pressure-actuated spring 53. With this structure, it is possible to prevent air from flowing inside the case from the outside.

When the internal pressure of the case 2 rises above the pressure at which the pressure-actuated valve 52 is pressed against the opening 23 by the pressure-actuated spring 53, the pressure-actuated valve 52 starts to move by pushing the pressure-actuated spring 53 under compression. A ventilation channel from the opening 23 to the opening 54 is thus defined and a gas within the case 2 is released through the opening 23 and the opening 54.

The battery pack 1 formed as described above is able to lessen damage on the battery pack 1 caused by combustion of a gas by suppressing combustion of the gas even when the gas is ejected from inside a battery 3 due to heat generation of the battery 3 caused by internal short-circuit or overcharge, because an amount of oxygen present within the case 2 has been reduced by the filling members 4.

Also, in a case where the pressure of a gas within the case 2 exceeds the operating pressure of the pressure valve 5, the pressure valve 5 opens to release the gas. The internal pressure of the case 2 can be thus lowered, and so is the risk that the case 2 explodes due to the pressure of the gas released from the battery 3. In addition, the opening 23 is kept clogged by the pressure valve 5 until the pressure of the gas within the case 2 exceeds the operating pressure of the pressure valve 5. It thus becomes possible to prevent air form flowing inside the case 2 from the outside through the opening 23. Consequently, a supply of new oxygen inside the case 2 from the outside is suppressed, which suppresses combustion of the gas. It thus becomes possible to lessen damage on the battery pack 1 caused by combustion of the gas.

Regarding the filling members 4, a case where a solid material is attached to the inner wall of the case 2 has been described. They are, however, not necessarily attached to the case 2. It is sufficient to dispose the filling members 4 so as to reduce the space within the case 2. Alternatively, they may be formed integrally with the case 2.

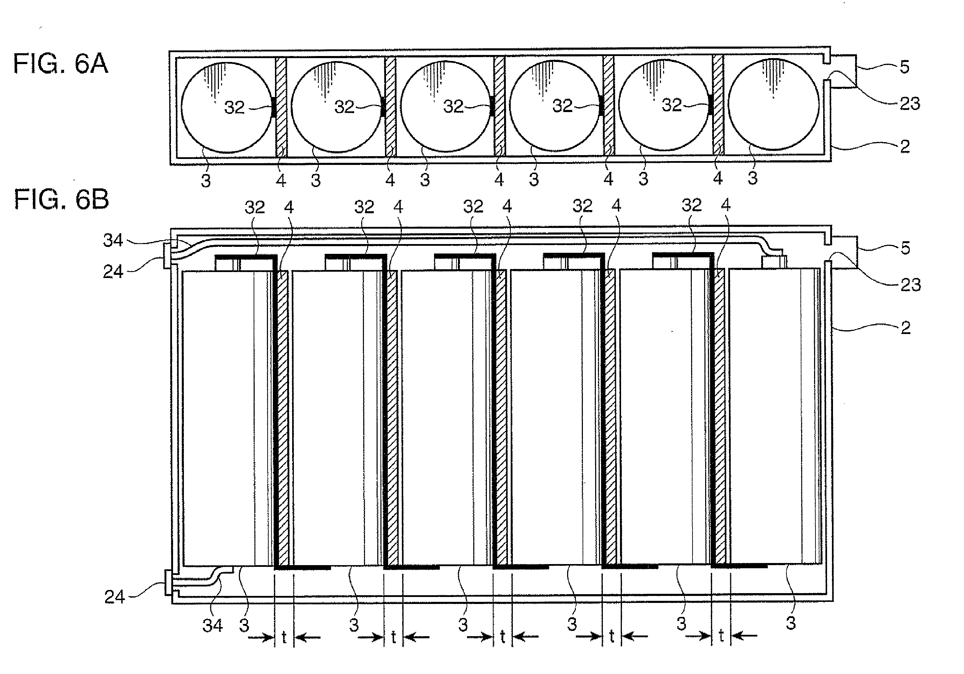

Also, regarding the filling members 4, a case where they are provided to fill a clearance generated due to the difference in shape between the cylindrical batteries 3 and the almost rectangular box-shaped case 2 has been described. However, as are shown in FIG. 6A and FIG. 6B, plate-shaped filling members 4 may be disposed so as to fill spaces between one battery 3 and another battery 3 disposed inside the case 2. FIG. 6A is a cross sectional view showing the battery pack 1 when viewed in a transverse direction of the batteries 3. FIG. 6B is a cross sectional view showing the battery pack 1 when viewed in a longitudinal direction of the batteries 3.

By disposing a plurality of the batteries 3 inside the case 2 in close adhesion to each other, a clearance can be lessened further, which makes it possible to reduce more oxygen within the case 2. However, in order to dispose, for example, the connection plates 32 between the respective batteries 3, or unillustrated protection elements to safeguard, for example, the batteries 3 against an overcurrent or an overvoltage and unillustrated wires to detect output voltages of the batteries 3, there is a case where it is necessary to provide an interval t between the adjacent batteries 3 as is shown in FIG. 6. In such a case, plate-shaped filling members 4 may be inserted into the intervals t to force air out from the intervals t.

Also, a material of the filling members 4 is not limited as long as the material is able to reduce an amount of oxygen present within the case 2 by reducing the space within the case 2. Examples of available materials include but not limited to nonflammable solids including metal, such as aluminum and titanium, ceramic, and sand, nonflammable liquids including water and ionic liquids based on imidazolium salt, pyridinium salt, and aliphatic quaternary ammonium salt, nonflammable gases, such as argon, nitrogen, and carbon dioxide, and nonflammable adiabatic agents, such as HEAT BUSTER TK2 available from Kabushiki Kaisha PDM Kenkyuusho.

In a case where nonflammable materials as specified above are used as the filling members 4, even when a battery 3 generates heat due to internal short-circuit or overcharge or a slight amount of oxygen remaining within the case 2 slightly bums (undergoes incomplete combustion) by reacting with a gas released from the battery 3, the filling members 4 remain unburned. It is therefore possible to suppress an increase in damage on the battery pack 1.

In a case where liquid or gaseous materials are used as the filling members 4, these nonflammable materials may be encapsulated in a container that readily melts with heat, for example, a bag made of polypropylene, so that the noninflammable material encapsulated in the bag is used as the filling members 4. Also, in a case where liquid materials are used as the filling materials 4, these materials may be absorbed, for example, into high-polymer materials, so that they are filled in the space as a gel-like material.

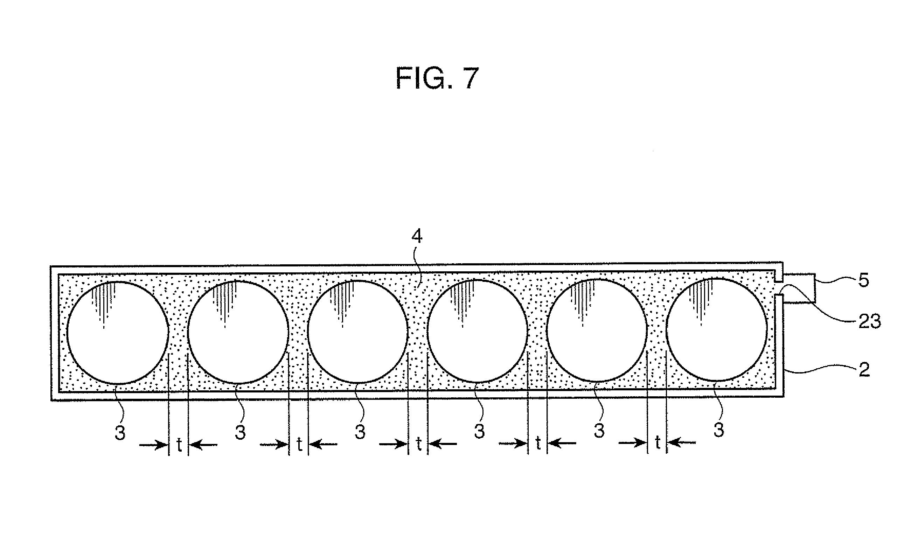

Also, for example, as is shown in FIG. 7, liquid, gaseous, or gel-like filling members 4 may be directly filled in a space between the case 2 and the batteries 3.

In addition, an oxygen absorbing member that absorbs oxygen, for example, oxygen absorbing members including iron (II) sulfate, activated carbon, or AGELESS (registered trademark) available from Mitsubishi Gas Chemical Company, Inc., may be used as the filling members 4 as well. In this case, because an amount of oxygen present within the case 2 is reduced by the oxygen absorbing member, even when an inflammable gas is ejected from a battery 3, combustion of the gas can be suppressed. It thus becomes possible to lessen damage on the battery pack 1 caused by combustion of the gas.

Also, an inert gas releasing member that releases an inert gas when the temperature exceeds a predetermined temperature may be used as the filling members 4. Examples of such an inert gas releasing member include but not limited to sodium hydrogen carbonate and magnesium carbonate that release carbon dioxide when overheated. In this case, when the temperature of the filling members 4 rises as a battery 3 generates heat due to internal short-circuit or overcharge or a slight amount of oxygen remaining within the case 2 slightly bums (undergoes incomplete combustion) by reacting with a gas released from the battery 3, the filling members 4 releases an inert gas, which forces air within the case 2 out to be discharged through the opening 23 and the pressure valve 5. Accordingly, an amount of oxygen present within the case 2 is reduced and combustion of the gas released from the battery 3 is suppressed. It thus becomes possible to lessen damage on the battery pack 1 caused by combustion of the gas.

The filling materials 4 are not necessarily provided. For example, the case 2 may be formed using an oxygen absorbing member or an inert gas releasing member by kneading the oxygen absorbing member or the inert gas releasing material into a raw material of the case 2. Accordingly, oxygen present within the case 2 is reduced by the case 2 and combustion of a gas released from a battery 3 is suppressed. It thus becomes possible to lessen damage on the battery pack 1 caused by combustion of the gas.

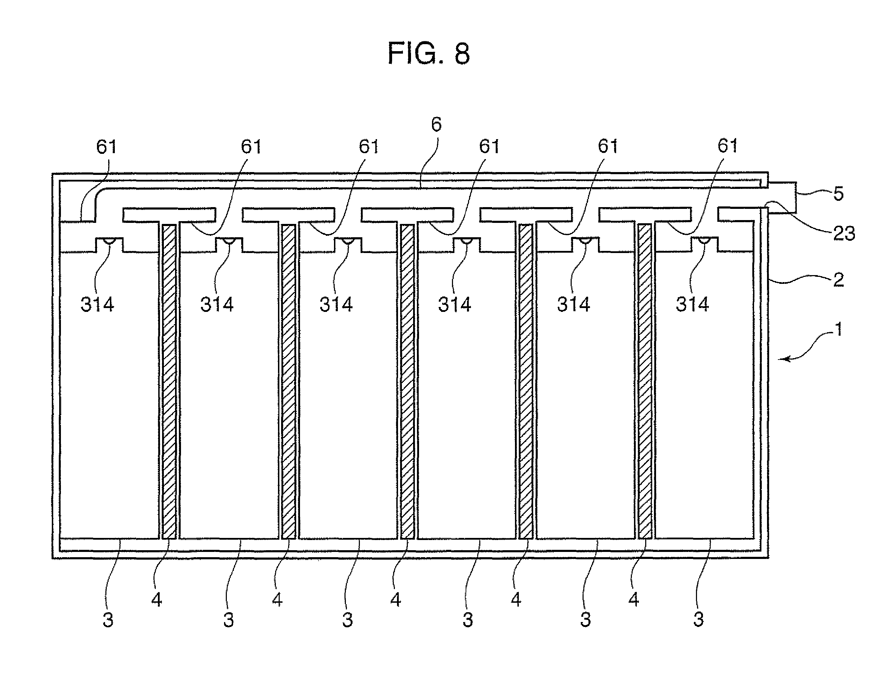

Also, as is shown in FIG. 8, a gas colleting member 61 may be attached to the sealing portion of each battery 3 so as to cover the electrode opening 314 of each battery 3, and a tubular member 6 connecting the respective gas collecting members 61 to the opening 23 may be further provided. The sectional area of the tubular member 6 is determined by a capacity per cell of the batteries 3 disposed inside the case 2. As a rough indication, when the capacity of the battery 3 is about 2 Ah, the sectional area is preferably 16 mm² or larger, when the capacity is about 5 Ah, the sectional area is preferably 40 mm² or larger, and when the capacity is about 10 Ah, the sectional area is preferably 80 mm² or larger. A preferable material of the tubular member 6 is metal, such as copper, aluminum, and stainless by taking heat releasing performance and heat resistance into account.

In this case, when the internal pressure of a battery 3 rises and a gas is released through the electrode opening 314, the released gas is guided to the opening 23 and released to the outside through the pressure valve 5. Accordingly, combustion of the gas released through the electrode opening 314 that is triggered by a reaction with oxygen present on the periphery of the battery 3 can be suppressed. It thus becomes possible to lessen damage on the battery pack 1.

The pressure valve 5 is not necessarily provided, either. For example, the hole diameter of the opening 23 may be made smaller to make it difficult for outside air to flow inside the case 2. Besides the foregoing, it is possible to adopt various configurations as the pressure valve 5. For example, an annular groove may be formed in the wall surface of the case 2, so that the annular groove functions as a pressure valve by breaking when an internal pressure of the case 2 rises.

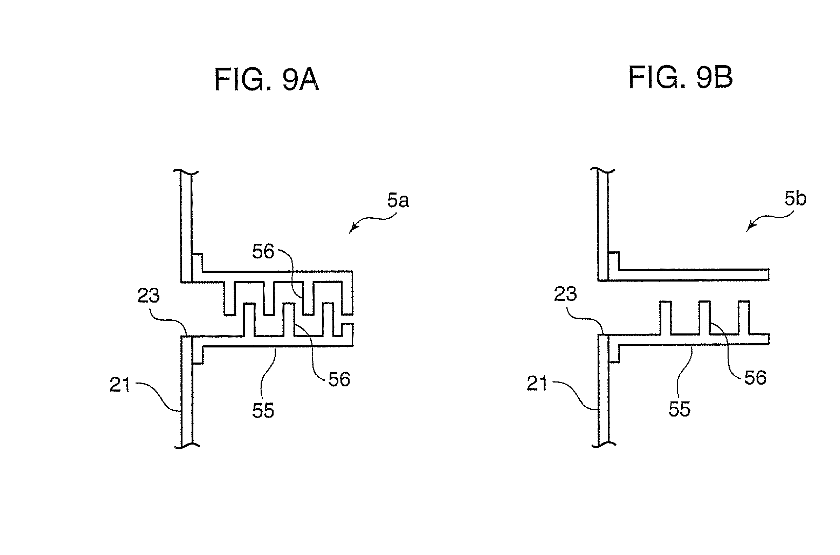

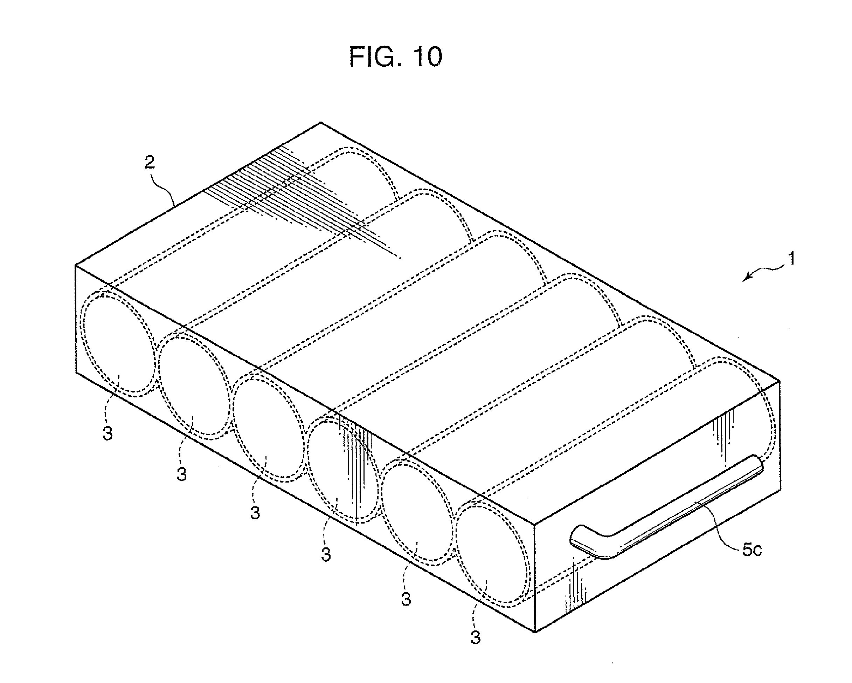

Alternatively, inflow prevention portions 5a, 5b, and 5c as shown, for example, in FIG. 9A, FIG. 9B, and FIG. 10, respectively, may be used instead of the pressure valve 5. The inflow prevention portion 5a shown in FIG. 9A is provided with a plurality of protrusions 56, for example, on the mutually opposing inner walls of a tube 55 in such a manner that they engage with each other alternately with a fine interval in between. According to the foregoing structure, a channel of air flowing inside the case 2 through the opening 23 is bent zigzag, which increases airflow resistance. The inflow prevention portion 5b shown in FIG. 9B is provided with a plurality of protrusions 56, for example, on one inner wall of the tube 55 so as to protrude into a channel of air. With this structure, it is possible to increase airflow resistance of air flowing inside the case 2 through the opening 23.

The inflow prevention portion 5c shown in FIG. 10 is formed, for example, of a bent tube and it increases airflow resistance of air flowing inside the case 2 through the opening 23. The inflow prevention portion 5c may be formed, for example, by bending a tube in zigzag or in spiral so as to increase airflow resistance.

The sectional area of the tube at the inflow prevention portions 5a, 5b, and 5c is determined by a capacity per cell of the batteries 3 disposed inside the case 2. As a rough indication, when a capacity of the battery 3 is about 2 Ah, the sectional area is preferably 16 mm² or larger, when a capacity is about 5 Ah, the sectional area is preferably 40 mm² or larger, and when the capacity is about 10 Ah, the sectional area is about 80 mm² or larger. In this case, a preferable material of the tube is metal, such as copper, aluminum, and stainless by taking heat releasing performance and heat resistance into account. Also, the inflow prevention portion 5a, 5b, or 5c may be attached to the electrode opening 314 of each battery 3.

A case where the battery pack 1 accommodates a plurality of the cylindrical batteries 3 in the case 2 has been described. It should be appreciated that the shape of the batteries 3 is not limited to a cylindrical shape and only a single battery 3 may be accommodated in the case 2. In a case where a plurality of batteries 3 are accommodated in the case 2, the battery pack 1 is able to suppress combustion of a gas within the case 2 even when any one of the batteries 3 generates heat due to internal short-circuit or overcharge and a gas is released from this battery 3. It is therefore possible to lessen damage on the batteries 3 other than the battery 3 that has released the gas.

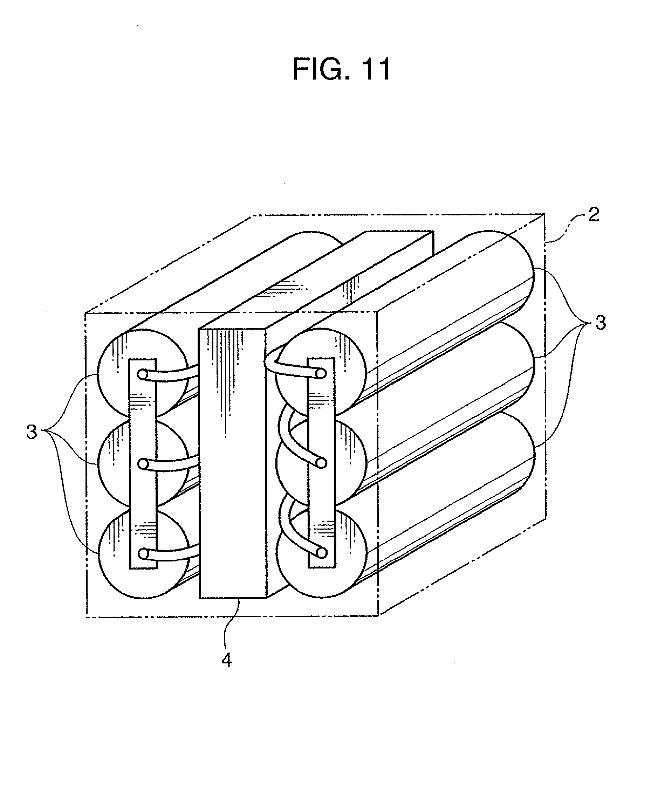

Also, a case where the batteries 3 aligned in a single line are accommodated in the case 2 has been described. However, for example, as is shown in FIG. 11, the batteries 3 may be aligned in more than one line with the filling member 4 being disposed in a wiring space between the lines.

Also, a material filling a space within the case 2 is not necessarily filled in the case 2 in advance. For example, a tank storing a nonflammable gas or liquid or a device that produces a nonflammable gas may be provided as an oxygen reducing portion that reduces oxygen within the case 2 by supplying the nonflammable gas or liquid inside the case 2, so that the nonflammable gas or liquid may be supplied inside the case 2 from the tank or the device periodically or when the internal temperature of the case 2 reaches or exceeds a predetermined temperature.

The oxygen reducing portion as described above is not necessarily provided as a part of the battery pack. A tank storing a nonflammable gas or liquid or a device that generates a nonflammable gas and a control device that controls a supply of the nonflammable gas or liquid to the case 2 from the tank or the device may be provided to the battery-mounted device on which the battery pack is mounted. Also, besides a battery pack having an independent case, for example, an accommodation chamber to accommodate the batteries 3 may be formed by integrally forming the battery pack with the case of the battery-mounted device, so that this accommodation chamber is used instead of the case 2.

### FIRST EMBODIMENT

Examples of the battery pack according to a first embodiment of the invention will be described.

### EXAMPLES

The battery 3 shown in FIG. 3 was fabricated in the following manner. That is, an aluminum foil current collector on which was applied a positive mixture was used as the positive plate 301 and a copper foil current collector on which was applied a negative mixture was used as the negative plate 303. The thickness of the separator 305 was 25 µm. The positive lead current collector 302 and the aluminum foil current collector were connected to each other by means of laser welding. Also, the negative lead current collector 304 and the copper foil current collector were connected to each other by means of resistance welding. The negative lead current collector 304 was electrically connected to the bottom of the metal bottomed-case 308 by means of resistance welding. The positive lead current collector 302 was electrically connected to a metal filter of the sealing plate 310 having an explosion-proof valve from the open end of the metal bottomed-case 308 by means of laser welding. A nonaqueous electrolyte was filled in the metal bottomed-case 308 from the open end. A seat was formed by making a groove at the open end of the metal bottomed-case 308. The resin outer gasket 309 and the sealing plate 310 were attached to the seat of the metal bottomed-case 308 by bending the positive lead current collector 302 and the metal bottomed-case 308 was sealed by caulking the entire periphery at the open end.

### (1) Fabrication of Positive Plate 301

The positive plate 301 was fabricated in the following manner. Herein, 85 parts by weight of lithium cobalt oxide powder as the positive mixture, 10 parts by weight of carbon powder as a conducting agent, and an N-methyl-2-pyrrolidone (hereinafter abbreviated as NMP) solution of polyvinylidene-fluoride (hereinafter, abbreviated as PVDF) as a binder in an amount comparable to 5 parts by weight of PVDF were mixed. The resulting mixture was applied on a 15-µm-thick aluminum foil current collector followed by drying and then rolling. The positive plate 301 having a thickness of 100 µm was thus fabricated.

### (2) Fabrication of Negative Plate 303

The negative plate 303 was fabricated in the following manner. Herein, 95 parts by weight of artificial graphite powder as the negative mixture and an NMP solution of PVDF as a binder in an amount comparable to 5 parts by weight of PVDF were mixed. The resulting mixture was applied on a 10-µm-thick copper foil current collector followed by drying and then rolling. The negative plate 303 having a thickness of 110 µm was thus fabricated.

### (3) Preparation of Nonaqueous Electrolyte

A nonaqueous electrolyte was prepared in the following manner. Ethylene carbonate and ethylmethyl carbonate were mixed in a volume ratio of 1:1 as a nonaqueous solvent. Lithium hexafluorophosphate (LiPF₆) as a solute was dissolved in the resulting nonaqueous solvent to achieve 1 mol/L. Herein, 4.5 ml of the nonaqueous electrolyte prepared in this manner was used.

### (4) Fabrication of Sealed Secondary Battery 3

The 25-µm-thick separator 305 was disposed between the positive plate 301 and the negative plate 303 and they were wounded together to form the cylindrical pole plate group 312, which was then inserted and sealed in the metal bottomed-case 308. The nonaqueous electrolyte secondary battery 3 was thus obtained. This battery was a cylindrical battery having a diameter of 25 mm and a height of 65 mm and the designed capacity of the battery was 2000 mAh. The completed battery 3 was covered with an 80-µm-thick heat-shrinkable tube made of polyethylene terephthalate used as the battery can insulator 33 up to the outer ridge of the top face. The battery was completed when the shrinkable tube was shrunk by heat with a hot air of 90°C.

### (5) Fabrication of Assembled Battery

Herein, six batteries 3 formed as above, which are cylindrical lithium-ion secondary batteries, were aligned as shown in FIG. 4 and interconnected in series using 0.2-mm-thick connection plates 32 made of nickel. Further, the connection lead wires 34 to flow a current between the batteries 3 interconnected in series and the battery pack terminals 24 are attached to the batteries 3. The assembled battery 31 was thus fabricated. The assembled battery 31 was accommodated in the battery accommodation portion 21 and the battery pack lid 22 was welded to the outer peripheral portion of the battery accommodation portion. Herein, a material forming the battery accommodation portion 21 and the battery pack lid 22 was stainless and the plate thickness in the thinnest portion was 0.5 mm.

### Example 1

As are shown in FIG. 1 and FIG. 2, the batteries 3 are aligned in the case 2 with no space between and the protrusion-like filling members 4 were provided to the battery accommodation portion 21 and the battery pack lid 22 so as to reduce a space between the batteries 3 and the inner wall of the case 2. The pack internal, spatial volume of the case 2 in this instance was 15 cc. Herein, the pressure valve 5 was not used so that the opening 23 was exposed to the outside.

### Example 2

A battery pack of Example 2 was fabricated by aligning the batteries 3 while leaving an interval t of 5 mm from one battery 3 to another battery 3 as are shown in FIG. 6A and FIG. 6B and using stainless plates as the filling members 4 disposed between the respective batteries 3. Herein, the pressure valve 5 was not used so that the opening 23 was exposed to the outside.

### Example 3

A battery pack of Example 3 was fabricated by aligning the batteries 3 while leaving an interval t of 5 mm from one battery 3 to another battery 3 as are shown in FIG. 6A and FIG. 6B and using ceramic plates as the filling members 4 disposed between the respective batteries 3. Herein, the pressure valve 5 was not used so that the opening 23 was exposed to the outside.

### Example 4

A battery pack of Example 4 was fabricated by aligning the batteries 3 while leaving an interval t of 5 mm from one battery 3 to another battery 3 as are shown in FIG. 6A and FIG. 6B and using hermetically sealed polypropylene bags filled with water as the filling members 4 disposed between the respective batteries 3. Herein, the pressure valve 5 was not used so that the opening 23 was exposed to the outside.

### Example 5

A battery pack of Example 5 was fabricated by aligning the batteries 3 while leaving an interval t of 5 mm from one battery 3 to another battery 3 as are shown in FIG. 6A and FIG. 6B and using HEAT BUSTER TK2 available from Kabushiki Kaisha PDM Kenkyuusho as the filling members 4 disposed between the respective batteries 3. Herein, the pressure valve 5 was not used so that the opening 23 was exposed to the outside.

### Example 6

A battery pack of Example 6 was formed by aligning the batteries 3 while leaving an interval t of 5 mm from one battery 3 to another battery 3 as is shown in FIG. 7 and filling the clearance within the case 2 with a nitrogen gas, which is an inert gas, as the filling members 4 to achieve the oxygen concentration of 10%.

### Example 7

A battery pack of Example 7 was formed by aligning the batteries 3 while leaving an interval t of 5 mm from one battery 3 to another battery 3 as are shown in FIG. 6A and FIG. 6B and using stainless plates as the filling members 4 disposed between the respective batteries 3, and by further attaching a pipe made of copper and having a diameter of 8.0 mm, a minor diameter of 6 mm, and a length of 300 mm to the opening 23 as the inflow prevention portion 5c shown in FIG. 10.

### Example 8

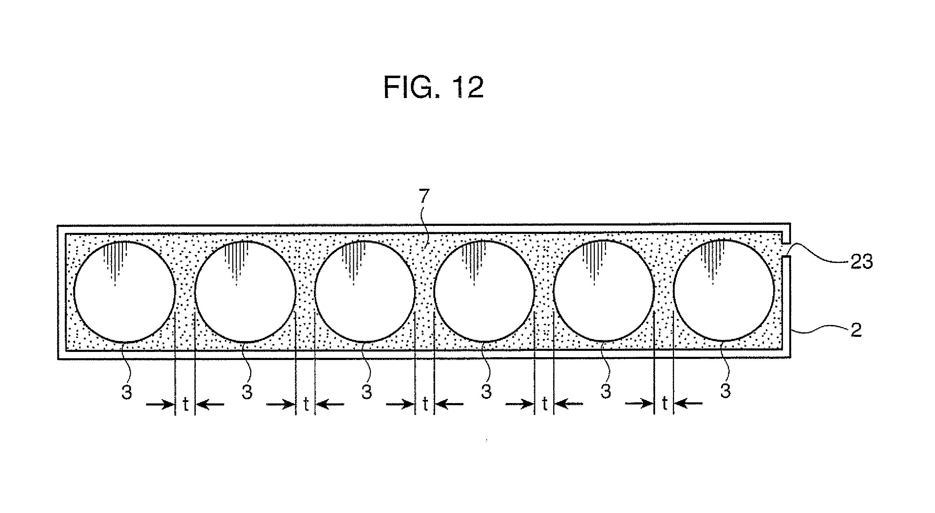

A battery pack of Example 8 was formed by aligning the batteries 3 while leaving an interval t of 5 mm from one battery 3 to another battery 3 as is shown in FIG. 12 and filling the clearance portion 7 within the case 2 with normal air, and by attaching the inflow prevention portion 5a shown in FIG. 9A to the opening 23.

### Example 9

A battery pack of Example 9 was formed by aligning the batteries 3 while leaving an interval t of 5 mm from one battery 3 to another battery 3 as is shown in FIG. 12 and filling the clearance portion 7 within the case 2 with normal air, and by attaching the pressure valve 5 shown in FIG. 5A and FIG. 5B to the opening portion 23. The operating pressure of the pressure valve 5 in this instance was 0.15 MPa.

### Example 10

A battery pack of Example 10 was formed by aligning the batteries 3 while leaving an interval t of 5 mm from one battery 3 to another battery 3 as is shown in FIG. 8 in such a manner that a gas released through the electrode opening 314 of the battery 3 was guided to the opening 23 using the gas collecting member 61 and the tubular member 6 both made of copper. Herein, the pressure valve 5 was not used so that the opening 23 was exposed to the outside.

### Example 11

A battery pack of Example 11 was formed by aligning the batteries 3 while leaving an interval t of 5 mm from one battery 3 to another battery 3 as are shown in FIG. 6A and FIG. 6B and using AGELESS (registered trademark), which is an oxygen absorber available from Mitsubishi Gas Chemical Corporation, Inc., as the filling members 4 disposed between the respective batteries 3. Herein, the pressure valve 5 was not used so that the opening 23 was exposed to the outside.

### Example 12

A battery pack of Example 12 was formed by aligning the batteries 3 while leaving an interval t of 5 mm from one battery 3 to another battery 3 as are shown in FIG. 6A and FIG. 6B and using a material obtained by kneading 90% part by weight of magnesium hydrogen carbonate powder that releases carbon dioxide, which is an inert gas, when overheated and 10% part by weight of PTFE (polytetrafluoroethylene) powder having a bonding effect in a mortar and molded into pellets as the filling members 4 disposed between the respective batteries 3. Herein, the pressure valve 5 was not used so that the opening 23 was exposed to the outside.

### Example 13

A battery pack of Example 13 was formed by aligning the batteries 3 while leaving an interval t of 5 mm from one battery 3 to another battery 3 as is shown in FIG. 12 and filling the clearance portion 7 within the case 2 with normal air, and by further attaching a copper pipe having a diameter of 8.0 mm, a minor diameter of 6 mm, and a length of 300 mm to the opening 23 as the inflow prevention portion 5c shown in FIG. 10.

### Comparative Example 1

A battery pack of Comparative Example 1 was formed by aligning the batteries 3 while leaving an interval t of 5 mm from one battery 3 to another battery 3 as is shown in FIG. 12 and filling the clearance portion 7 within the case 2 with normal air, and by leaving the opening 23 exposed to the outside. A battery pack internal, spatial volume in this instance was 104 cc.

Evaluations as follows were made on the respective battery packs obtained by Examples and Comparative Example above.

### (6) Nail Penetration Test

The completed battery packs were charged to 25.2 V. Thereafter, a nail made of iron and having a diameter of 2 mm was inserted into a through-hole for nail penetration provided in advance in the battery pack lid at a temperature 20°C and at a rate of 5 mm per second so that the nail penetrated through the first battery in the battery pack by passing the center portion in the height direction and in the diameter direction. Then, observation was made as to whether a hot inflammable gas discharged from the battery in which nail was inserted burned within the battery pack and other batteries in which no nails were inserted underwent thermorunaway. Also, at the same time, the surface temperatures of the second and sixth batteries were measured in order to determine the heat affect. The through hole for nail penetration was formed in such a manner so as to prevent leakage of an internal gas with a heat resistant sealing member.

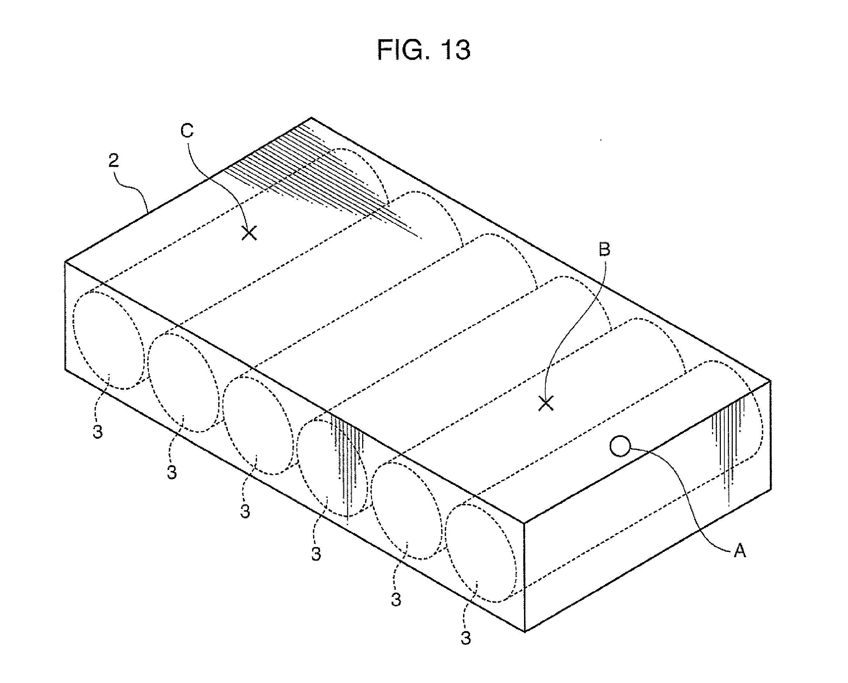

FIG. 13 is an explanatory view showing a position A at which the nail was inserted and positions B and C at which the battery surface temperatures were measured in this test. This FIG. 13 explains the positions A, B, and C and the structure used in the test were as described in respective Examples above.

The nail penetration test was conducted for Examples 1 through 13 and Comparative Example 1 above and the peak values of the temperatures measured at the position B and C are set forth in Table 1 below. In a state before the nail penetration test was conducted, the temperature of each battery was 20°C, which is equal to ambient temperature. The peak values of the temperatures measured at the positions B and C do not indicate pure battery surface temperatures alone and a temperature rise caused by a hot inflammable gas is added to the peak values.

**Table 1**

| | INFLUENCES ON OTHER BATTERY CELLS | BATTERY SURFACE TEMPERATURE AT POSITION B | BATTERY SURFACE TEMPERATURE AT POSITION C |
|---|---|---|---|
| EXAMPLE 1 | NO INFLUENCES | 418°C | 473 °C |
| EXAMPLE 2 | NO INFLUENCES | 405 °C | 466 °C |
| EXAMPLE 3 | NO INFLUENCES | 420 °C | 477 °C |
| EXAMPLE 4 | NO INFLUENCES | 198 °C | 28 °C |
| EXAMPLE 5 | NO INFLUENCES | 274 °C | 32 °C |
| EXAMPLE 6 | NO INFLUENCES | 304 °C | 348 °C |
| EXAMPLE 7 | NO INFLUENCES | 273 °C | 128 °C |
| EXAMPLE 8 | NO INFLUENCES | 420 °C | 363 °C |
| EXAMPLE 9 | NO INFLUENCES | 399 °C | 343 °C |
| EXAMPLE 10 | NO INFLUENCES | 128 °C | 95 °C |
| EXAMPLE 11 | NO INFLUENCES | 410 °C | 461 °C |
| EXAMPLE 12 | NO INFLUENCES | 488 °C | 420 °C |
| EXAMPLE 13 | NO INFLUENCES | 560 °C | 508 °C |
| COMPARATIVE EXAMPLE 1 | ALL BATTERY CELLS UNDERWENT THERMORUNAWAY | 954 °C | 711 °C |

The term, "thermorunaway", in Table 1 above indicates a state in which the positive active material in the battery undergoes a reduction action by heat and releases oxygen. When thermorunaway occurs, oxygen released by the reduction reaction bums by reacting with an evaporated electrolyte. The occurrence of thermorunaway was determined by comparing the weights before and after the nail penetration test for each battery 3. In short, it was determined that thermorunaway had occurred when there was a weight loss after the nail penetration test.

As set forth in Table 1 above, it is understood that influences on other batteries can be reduced considerably by reducing a space within the battery pack by one way or another. This is because a hot inflammable gas discharged from the battery is discharged intact to the outside of the battery pack without shifting to a combustion state due to insufficient oxygen within the battery pack.

Also, it is understood from Examples 6 through 8 that even when a space within the battery pack is large, the effect can be achieved by providing the opening with the structure to prevent air from flowing inside from the outside. In this case, the battery temperature becomes slightly higher due to oxygen within the battery pack. However, because oxygen is not supplied from the outside of the battery pack, combustion will not last. Hence, it can be said that influences on the other batteries can be reduced.

However, in the battery pack (Comparative Example 1) having a large spatial volume within the battery pack and having no air inflow prevention means, it is thought that thermorunaway of other batteries was triggered because a hot inflammable gas discharged from the battery shifted to a combustion state due to oxygen in air within the battery pack and the combustion lasted due to air kept flowing inside from the outside. As has been described, it is possible to suppress a hot inflammable gas discharged from the battery from continuing to bum within the battery pack by reducing a space within the battery pack to the smallest possible extent and by providing the inflow preventing structure that prevents air from flowing inside from the outside. It thus becomes possible to lessen damage on the battery pack and spread of fire.

### SECOND EMBODIMENT

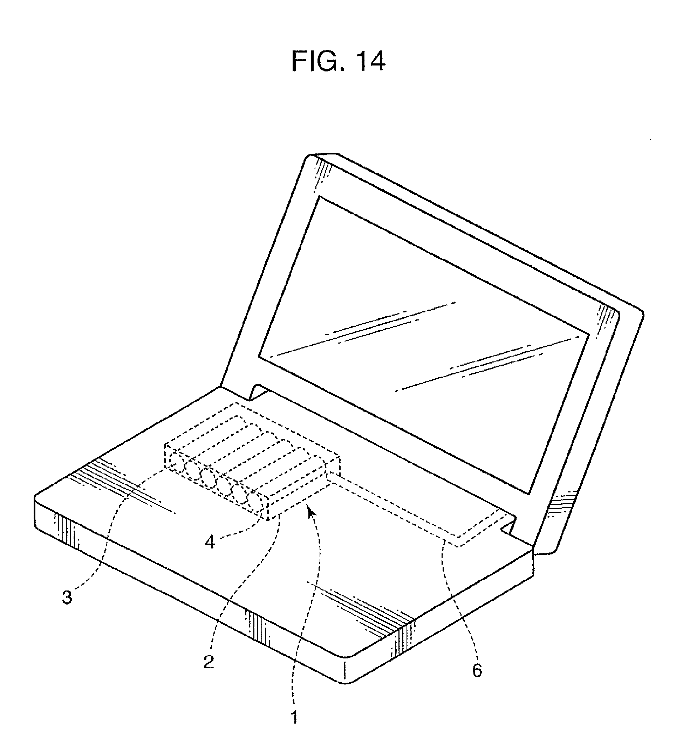

A personal computer, which is an example of a battery-mounted device according to the second embodiment of the invention will now be described. FIG. 14 is a conceptual view showing an example structure of a portable personal computer according to the second embodiment of the invention. The portable personal computer shown in FIG. 14 has the battery pack 1 mounted thereon. The tubular member 6 is provided on the side of the personal computer main body. With this structure, it is possible to achieve the effect as achieved from the above explained first embodiment.

### THIRD EMBODIMENT

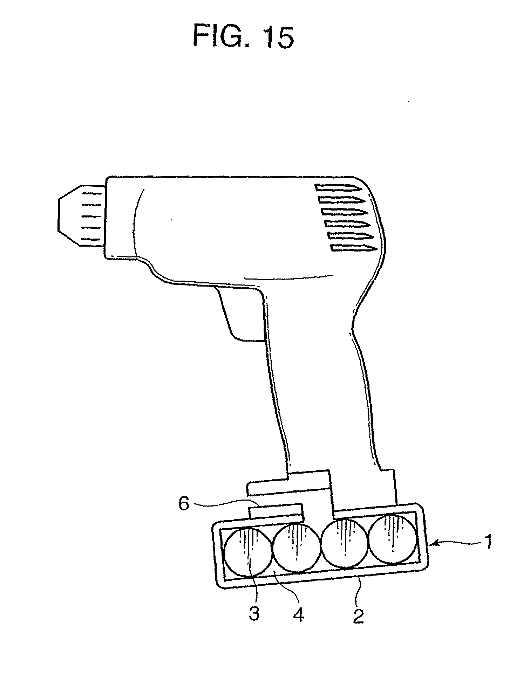

An electric tool as an example of the battery-mounted device according to the third embodiment of the invention will now be described. FIG. 15 is a conceptual view showing an example structure of an electric tool according to the third embodiment of the invention. The electric tool shown in FIG. 15 has the battery pack 1 mounted thereon. Herein, the tubular member 6 is provided on the side of the electric tool main body. With this structure, it is possible to achieve the same effect as achieved from the above explained first embodiment.

### FOURTH EMBODIMENT

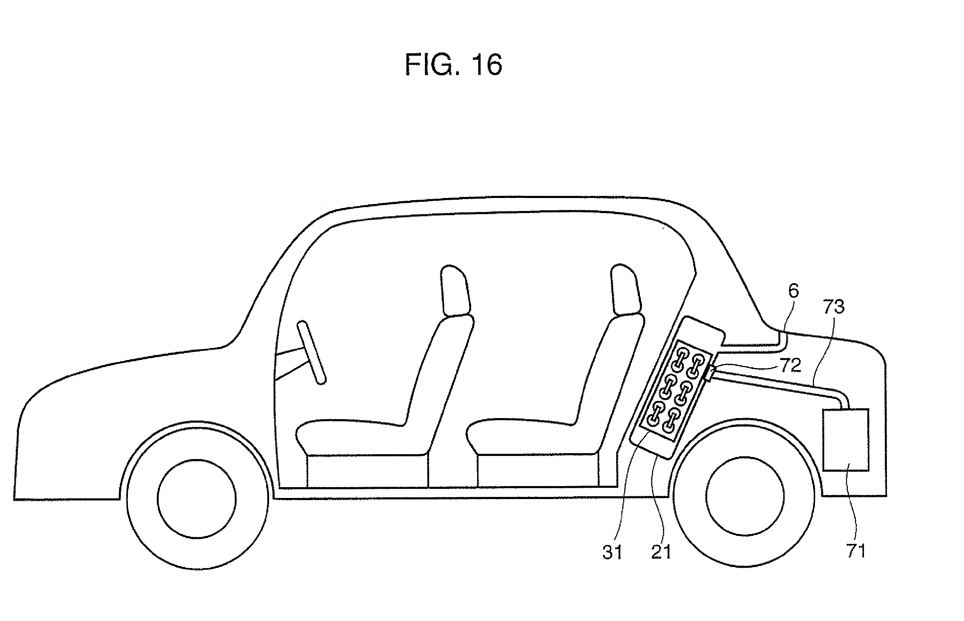

An automobile, which is an example of a battery-mounted device according to the fourth embodiment will now be described. FIG. 16 is a conceptual view showing an example structure of the automobile according to the fourth embodiment of the invention. The automobile shown in FIG. 16 includes the battery accommodation chamber 21, the assembled battery 31, the tubular member 6, a nonflammable gas tank 71 (inert gas releasing member), a safety valve 72 (oxygen reducing portion), and a tube 73.

The tubular member 6 is provided in such a manner that one end is connected to the battery accommodation chamber 21 and the other end opens to the outside of the automobile. The nonflammable gas tank 71 stores, for example, a compressed nonflammable gas (inert gas). The battery accommodation chamber 21 and the nonflammable gas tank 71 are connected to each other with the tube 73. The safety valve 72 is provided to the opening of the tube 73 on the side of the battery accommodation chamber 21.

The safety valve 72 is configured in such a manner that the valve opens, for example, when it is heated to or above a predetermined temperature. According to the foregoing structure, when an abnormality occurs in the assembled battery 31 and the safety valve 72 is heated to or above the predetermined temperature, the safety valve 72 opens for the nonflammable gas to be supplied inside the battery accommodation chamber 21 from the nonflammable gas tank 71. Accordingly, the nonflammable gas supplied from the nonflammable gas tank 71 forces out a gas released from the assembled battery 31 and oxygen within the battery accommodation chamber 21 to the outside of the battery accommodation chamber 21 and further to the outside of the automobile via the tubular member 6. It thus becomes possible to lower a risk that a gas released from the assembled battery 31 bums within the battery accommodation chamber 21.

With this structure, it is possible to achieve the same effect as achieved from the above explained first embodiment.

It should be appreciated that the oxygen reducing portion is not limited to a valve that opens when heated. For example, the oxygen reducing portion may be a control circuit that opens the safety valve 72 upon detection of an abnormality in a battery 3 on the basis of the temperature or a voltage across the battery 3, an internal pressure of the battery accommodation chamber 21.

A battery pack according to one aspect of the present invention includes a battery having a risk of releasing a gas under abnormal conditions, a case that accommodates the battery, and an oxygen reducing portion that reduces an amount of oxygen within the case.

According to the foregoing structure, an amount of oxygen within the case is reduced by the oxygen reducing portion. Hence, should a gas be released from the battery, it is possible to lessen damage on the battery pack caused by combustion of the gas within the case because an amount of oxygen to react with the gas has been reduced.

Also, it is preferable that the oxygen reducing portion includes a filling member that is provided to fill a space between the case and the battery. With this structure, an amount of oxygen present in a space between the case and the battery is reduced by the filling member. Hence, should a gas be released from the battery, it is possible to lessen damage on the battery pack caused by combustion of the gas within the case because an amount of oxygen to react with the gas has been reduced.

Also, it is preferable that the filling member is a nonflammable material. With this structure, should a gas be released from the battery and oxygen remaining in the space between the case and the battery react with each other to generate heat, it is possible to reduce the spread of damage on the battery pack through the burning of the filling member.

Also, the filling member may be a solid, a liquid, or a gas. When the filling member is a solid, because it is easy to handle, the assembly of the battery pack becomes easier. When the filling member is a liquid, even when the shape of a space between the case and the battery is complex, it is easy to fill the space with the filling member. When the filling member is a gas, it becomes easy to reduce the weight of the battery pack.

Also, the oxygen reducing portion may include an oxygen absorbing member that absorbs oxygen. With this structure, an amount of oxygen within the case is reduced by the oxygen absorbing member. Hence, should a gas be released from the battery, it is possible to lessen damage on the battery pack caused by combustion of the gas within the case because an amount of oxygen to react with the gas has been reduced.

Also, the oxygen reducing portion may include an inert gas releasing member that releases an inert gas inside the case when an internal temperature of the case exceeds a predetermined temperature. With this structure, should the internal temperature of the case exceed the predetermined temperature due to heat generation of the battery or heat generated by a reaction between oxygen remaining in a space between the case and the battery and a gas when the gas is released from the battery, an inert gas is released inside the case by the inert gas releasing member. Hence, should a gas be released from the battery, it is possible to lessen damage on the battery pack caused by combustion of the gas within the case because a reaction between the gas and oxygen is suppressed by the inert gas.

Also, it is preferable to further include a releasing portion that releases a gas released inside the case from the battery to an outside of the case. With this structure, should a gas be released from the battery, it is possible to lessen damage on the battery pack caused by combustion of the gas within the case because the gas is released to the outside of the case by the releasing portion.

Also, it is preferable to further include an inflow prevention portion that prevents air from flowing inside the case from the outside via the releasing portion. With this structure, the inflow prevention portion prevents air from flowing inside the case from the outside. Hence, should a gas be released from the battery, it is possible to lessen damage on the battery pack caused by combustion of the gas within the case due to oxygen flowing inside the case from the outside.

Also, it is preferable that the inflow prevention portion is a pressure valve that prevents air from flowing inside the case and releases the gas released inside the case from the battery to the outside of the case when an internal pressure of the case exceeds a preset pressure. With this structure, the pressure valve prevents air from flowing inside the case from the outside unless an internal pressure of the case exceeds the preset pressure. Hence, should a gas be released from the battery, it is possible to lessen damage on the battery pack caused by combustion of the gas within the case due to oxygen flowing inside the case from the outside. In a case where the internal pressure of the case exceeds the preset pressure, the gas released inside the case from the battery is released to the outside of the case by the pressure valve. It is therefore possible to suppress the case from exploding due to an increase in the internal pressure of the case.

Also, the inflow prevention portion may be a member that increases airflow resistance by bending a channel of air. With this structure, because airflow resistance is increased because a channel of air flowing into the case from the outside is bent, oxygen in air flowing to the case from the outside is reduced. Hence, should a gas be released from the battery, it is possible to lessen damage on the battery pack caused by combustion of the gas within the case due to oxygen flowing inside the case from the outside.

Also, the inflow prevention portion may be a protrusion provided so as to protrude into a channel of air from the outside to inside the case. With this structure, because airflow resistance of air flowing into the case from the outside is increased by the protrusion provided so as to protrude inside the channel, oxygen in air flowing to the case from the outside is reduced. Hence, should a gas be released from the battery, it is possible to lessen damage on the battery pack caused by combustion of the gas within the case due to oxygen flowing inside the case from the outside.

Also, it is preferable that the battery further includes a releasing opening through which the gas is released when an internal pressure of the battery rises, and that the battery pack further includes a tubular member that guides the gas released through the releasing opening to the releasing portion. With this structure, when a gas is released through the releasing opening when the internal pressure of the battery rises, the released gas is guided to the releasing portion by the tubular member and released to the outside. Hence, it is possible to lower a risk that damage is given to the battery by the gas that diffuses on the periphery of the battery and bums in vicinity of the battery.

Also, the case may be formed using a material that absorbs oxygen so as to function as the oxygen reducing portion. With this structure, an amount of oxygen within the case is reduced by the case. Hence, should a gas be released from the battery, it is possible to lessen damage on the battery pack caused by combustion of the gas within the case because an amount of oxygen to react with the gas has been reduced.

Also, the case may be formed by using a material that releases an inert gas inside the case when an internal temperature of the case exceeds a predetermined temperature so as to function as the oxygen reducing portion. With this structure, should the internal temperature of the case exceed the predetermined temperature due to heat generation of the battery or heat generated by a reaction between oxygen remaining in a space between the case and the battery and a gas when the gas is released from the battery, an inert gas is released inside the case by the case. Hence, should a gas be released from the battery, it is possible to lessen damage on the battery pack caused by combustion of the gas within the case because a reaction between the gas and oxygen is suppressed by the inert gas.

Also, a battery-mounted device according to another aspect of the invention includes the battery pack described above. With this structure, it is possible to lessen damage on the battery pack caused by combustion of the gas within the case of the battery pack mounted on the battery-mounted device.

Also, the battery-mounted device according to one aspect of the invention includes a battery having a risk of releasing a gas under abnormal conditions, an accommodation chamber that accommodates the battery, and an oxygen reducing portion that reduces an amount of oxygen within the accommodation chamber. With this structure, an amount of oxygen within the accommodation chamber in which is accommodated the battery having a risk of releasing a gas is reduced by the oxygen reducing portion incorporated in the battery-mounted device. Hence, should a gas be released from the battery, it is possible to lower a risk that the battery and the battery-mounted device are damaged by combustion of the gas within the accommodation chamber because an amount of oxygen to react with the gas has been reduced.

Also, it is preferable that the oxygen reducing portion includes an oxygen absorbing member that absorbs oxygen. With this structure, an amount of oxygen within the accommodation chamber is reduced by the oxygen reducing portion. Hence, should a gas be released from the battery, it is possible to lessen damage on the battery-mount device caused by combustion of the gas within the accommodation chamber because an amount of oxygen to react with the gas has been reduced.

Also, the oxygen reducing portion may include an inert gas releasing member that releases an inert gas inside the accommodation chamber when an internal temperature of the accommodation chamber exceeds a predetermined temperature. With this structure, should the internal temperature of the accommodation chamber exceed the predetermined temperature due to heat generation of the battery or heat generated by a reaction between oxygen remaining in a space of the accommodation chamber and a gas when the gas is released from the battery, an inert gas is released inside the accommodation chamber by the inert gas releasing member. Hence, should a gas be released from the battery, it is possible to lessen damage on the battery-mounted device caused by combustion of the gas within the accommodation chamber because a reaction between the gas and oxygen is suppressed by the inert gas.

Also, it is preferable to further include a releasing portion that releases a gas released inside the accommodation chamber from the battery to an outside of the accommodation chamber. With this structure, should a gas be reduced from the battery, the gas is released to the outside of the accommodation chamber by the releasing portion. It is therefore possible to lessen damage on the battery-mount device caused by combustion of the gas within the accommodation chamber.

Also, it is preferable to further include an inflow prevention portion that prevents air from flowing inside the accommodation chamber from the outside via the releasing portion. With this structure, the inflow prevention portion prevents air from flowing inside the accommodation chamber from the outside. Hence, should a gas be released from the battery, it is possible to lessen damage on the battery-mounted device caused by combustion of the gas within the accommodation chamber due to oxygen flowing inside the accommodation chamber from the outside.

Also, it is preferable that the inflow prevention portion is a pressure valve that prevents air from flowing inside the accommodation chamber and releases the gas released inside the accommodation chamber from the battery to the outside of the accommodation chamber when an internal pressure of the accommodation chamber exceeds a preset pressure. With this structure, the pressure valve prevents air from flowing inside the accommodation chamber from the outside unless the internal pressure of the accommodation chamber exceeds the preset pressure. Hence, should a gas be released from the battery, it is possible to lessen damage on the battery-mounted device caused by combustion of the gas within the accommodation chamber due to oxygen flowing inside the accommodation chamber from the outside. In a case where the internal pressure of the accommodation chamber exceeds the preset pressure, the gas released inside the accommodation chamber from the battery is released to the outside of the accommodation chamber by the pressure valve. It is therefore possible to suppress damage on the battery-mounted device caused by an increase in the internal pressure of the accommodation chamber.

Also, the inflow prevention portion may be a member that increases airflow resistance by bending a channel of air. With this structure, because airflow resistance is increased by bending a channel of air flowing inside the accommodation chamber from the outside, oxygen in air flowing inside the accommodation chamber from the outside is reduced. Hence, should a gas be released from the battery, it is possible to lessen damage on the battery-mounted device caused by combustion of the gas within the accommodation chamber due to oxygen flowing inside the accommodation chamber from the outside.

Also, the inflow prevention portion may be a protrusion provided so as to protrude into a channel of air from the outside to inside of the accommodation chamber. With this structure, because airflow resistance of air flowing into the chamber from the outside is increased by the protrusion provided so as to protrude into the channel, oxygen in air flowing into the accommodation chamber from the outside is reduced. Hence, should a gas be released from the battery, it is possible to lessen damage on the battery-mounted device caused by combustion of the gas within the accommodation chamber due to oxygen flowing inside the accommodation chamber from the outside.

Also, it is preferable that the battery further includes a releasing opening through which the gas is released when an internal pressure of the battery rises, and that the battery-mounted device further includes a tubular member that guides the gas released through the releasing opening to the releasing portion. With this structure, when a gas is released through the releasing opening as the internal pressure of the battery rises, the released gas is guided to the releasing portion by the tubular member and released to the outside. It is therefore possible to lower a risk that the battery-mounted device is damaged by the gas that diffuses on the periphery of the battery and burns in vicinity of the battery.

Also, it is preferable that the inert gas releasing member is formed by using a material that releases an inert gas inside the accommodation chamber when an internal temperature of the accommodation chamber exceeds a predetermined temperature. With this structure, should the internal temperature of the accommodation chamber exceed the predetermined temperature due to heat generation of the battery or heat generated by a reaction between oxygen remaining in the accommodation chamber and a gas when the gas is released from the battery, an inert gas is released inside the accommodation chamber by the inert gas releasing member. Hence, should a gas be released from the battery, it is possible to lessen damage on the battery-mounted device caused by combustion of the gas within the accommodation chamber because a reaction between the gas and oxygen is suppressed by the inert gas.

### INDUSTRIAL APPLICABILITY

The battery pack of the invention is able to lessen damage on the battery pack and spread of fire even when a hot inflammable gas is discharged from a battery within the battery pack upon occurrence of an abnormality in the battery and is also able to lower a risk that fire spreads outside the battery pack.

## Claims

1. A battery pack, comprising:
a battery having a risk of releasing a gas under abnormal conditions;
a case that accommodates the battery; and
an oxygen reducing portion that reduces an amount of oxygen within the case.

2. The battery pack according to claim 1, wherein:
the oxygen reducing portion includes a filling member that is provided to fill a space between the case and the battery.

3. The battery pack according to claim 2, wherein:
the filling member is a nonflammable material.

4. The battery pack according to claim 2 or 3, wherein:
the filling member is a solid.

5. The battery pack according to claim 2 or 3, wherein:
the filling member is a liquid.

6. The battery pack according to claim 2 or 3, wherein:
the filling member is a gas.

7. The battery pack according to claim 1 or 2, wherein:
the oxygen reducing portion includes an oxygen absorbing member that absorbs oxygen.

8. The battery pack according to claim 1 or 2, wherein:
the oxygen reducing portion includes an inert gas releasing member that releases an inert gas inside the case when an internal temperature of the case exceeds a predetermined temperature.

9. The battery pack according to any one of claims 1 through 8, further comprising:
a releasing portion that releases a gas released inside the case from the battery to an outside of the case.

10. The battery pack according to claim 9, further comprising:
an inflow prevention portion that prevents air from flowing inside the case from the outside via the releasing portion.

11. The battery pack according to claim 10, wherein:
the inflow prevention portion is a pressure valve that prevents air from flowing inside the case and releases the gas released inside the case from the battery to the outside of the case when an internal pressure of the case exceeds a preset pressure.

12. The battery pack according to claim 10, wherein:
the inflow prevention portion is a member that increases airflow resistance by bending a channel of air.

13. The battery pack according to claim 10, wherein:
the inflow prevention portion is a protrusion provided so as to protrude into a channel of air from the outside to inside the case.

14. The battery pack according to any one of claims 9 through 13, wherein:
the battery further includes a releasing opening through which the gas is released when an internal pressure of the battery rises; and
the battery pack further comprises a tubular member that guides the gas released through the releasing opening to the releasing portion.

15. The battery pack according to claim 1, wherein:
the case is formed using a material that absorbs oxygen and thereby functions as the oxygen reducing portion.

16. The battery pack according to claim 1, wherein:
the case is formed by using a material that releases an inert gas inside the case when an internal temperature of the case exceeds a predetermined temperature and thereby functions as the oxygen reducing portion.

17. A battery-mounted device, comprising:
the battery pack set forth in any one of claims 1 through 16.

18. A battery-mounted device, comprising:
a battery having a risk of releasing a gas under abnormal conditions;
an accommodation chamber that accommodates the battery; and
an oxygen reducing portion that reduces an amount of oxygen within the accommodation chamber.

19. The battery-mounted device according to claim 18, wherein:
the oxygen reducing portion includes an oxygen absorbing member that absorbs oxygen.

20. The battery-mounted device according to claim 18, wherein:
the oxygen reducing portion includes an inert gas releasing member that releases an inert gas inside the accommodation chamber when an internal temperature of the accommodation chamber exceeds a predetermined temperature.

21. The battery-mounted device according to any one of claims 18 through 20, further comprising:
a releasing portion that releases a gas released inside the accommodation chamber from the battery to an outside of the accommodation chamber.

22. The battery-mounted device according to claim 21, further comprising:
an inflow prevention portion that prevents air from flowing inside the accommodation chamber from the outside via the releasing portion.

23. The battery-mounted device according to claim 22, wherein:
the inflow prevention portion is a pressure valve that prevents air from flowing inside the accommodation chamber and releases the gas released inside the accommodation chamber from the battery to the outside of the accommodation chamber when an internal pressure of the accommodation chamber exceeds a preset pressure.

24. The battery-mounted device according to claim 22, wherein:
the inflow prevention portion is a member that increases airflow resistance by bending a channel of air.

25. The battery-mounted device according to claim 22, wherein:
the inflow prevention portion is a protrusion provided so as to protrude into a channel of air from the outside to inside the accommodation chamber.

26. The battery-mounted device according to any one of claims 21 through 25, wherein:
the battery further includes a releasing opening through which the gas is released when an internal pressure of the battery rises; and
the battery-mounted device further comprises a tubular member that guides the gas released through the releasing opening to the releasing portion.

27. The battery-mounted device according to claim 20, wherein:
the inert gas releasing member is formed by using a material that releases an inert gas inside the accommodation chamber when an internal temperature of the accommodation chamber exceeds a predetermined temperature.
